# EUROPÄISCHE PATENTANMELDUNG

(11) **EP 0 747 724 A1**
(43) Veröffentlichungstag der Anmeldung: **11.12.1996**
(21) Anmeldenummer: 96108537.0
(22) Anmeldetag: 29.05.1996
(51) Int. Cl.: G01S 7/41

(54) **Vorrichtung und Verfahren zur automatischen Detektion oder Klassifikation von Objekten**

(30) Priorität: 29.05.1995 DE 19518993
(71) Anmelder: Alcatel SEL Aktiengesellschaft, D-70435 Stuttgart (DE)
(72) Erfinder: Trompf, Michael Gert, 71282 Hemmingen (DE); Strecker, Andreas, 73066 Uhingen (DE); Thierer, Gebhard, 71254 Ditzingen (DE)
(74) Vertreter: Knecht, Ulrich Karl, Dipl.-Ing.

(57) **Zusammenfassung**

Vorrichtung und Verfahren zur automatischen Detektion oder Klassifikation von Objekten.

Eine automatische Zielklassifikation oder Zieldetektion von Objekten wird mittels Dopplerechos von Radarsignalen mit neuronalen Netzen vorgenommen. Die neuronalen Netze sind Multilayer Back Propagation Netzwerke (MLBPN) oder Multilayer Perzeptron Netze, welche eine komplizierte Netztopologie, lange Rechenzeiten und lange Entwicklungszeiten für problemangepaßte Netztopologien aufweisen.

Als neuronales Netz wird ein Kaskadenkorrelations-Netz verwendet, welches eine automatische Generierung einer problemangepaßten Netztopologie und Training von Netzwerkparametern in einem Schritt ermöglicht und welches eine schnelle Klassifikation ermöglicht.

## Beschreibung

Die Erfindung betrifft eine Vorrichtung und ein Verfahren zur automatischen Detektion oder Klassifikation von Objekten mittels Dopplerechos von Radarsignalen mittels eines neuronalen Netzes.

Aus dem Stand der Technik ist es bekannt, eine sogenannte Zielklassifikation oder Zieldetektion mittels eines Dopplerechos von ausgesendeten Radarsignalen vorzunehmen. Zur Signalklassifikation werden neuronale Netze verwendet. Diese neuronalen Netze sind sogenannte MLBPN (Multilayer Back Propagation Neural Networks). Mittels eines solchen Multilayer Back Propagation Networks kann eine Signalaufbereitung dergestalt erfolgen, daß beispielsweise zwischen verschiedenen Objekten, wie z. B. verschiedenen Typen von Luftfahrzeugen, unterschieden werden kann ("Radar Target Recognition Using Multilayer Back Propagation Neural Network (MLBPN)"; von: D. Nandagopal et al; Defence Science and Technology Organisation Salisbury, Australien, Seite 422 bis 425).

Des weiteren ist im Stand der Technik aufgeführt, welche verschiedenen Möglichkeiten sich bieten, um eine Zielklassifikation unter Verwendung von Radardaten durchzuführen. Hierbei wird zwischen drei verschiedenen Möglichkeiten unterschieden, welche zur Unterscheidung verschiedener Klassen von Luftkraftfahrzeugen verwendet werden. Eine Möglichkeit davon ist die Verwendung eines Multilayer Perzeptron neuronalen Netzwerkes oder eines sogenannten Branched Multilayer Perzeptron neuronalen Netzwerkes. Beide Netzwerke wurden unter gleichen Bedingungen getestet und als Unterscheidungsmerkmal und Klassifikationskriterium wurde ausgewählt, welches dieser Netzwerke zu einer höheren Klassifikationsrate führte. Der Unterschied zwischen diesen beiden Netzwerken und den drei verschiedenen Studien lag darin, daß die Netztopologie verändert wurde. Hierbei wurden die sogenannten "Hidden Nodes", die ein neuronales Netzwerk klassifizieren, in ihrer Anzahl verändert.

Des weiteren wird in der Studie beschrieben, daß neuronale Netze, aufgrund der Tatsache, daß sie trainiert werden können, dazu führen, daß eine Merkmalsextraktionsfunktion nicht verwendet werden muß. Die Studie befaßt sich damit, daß eine erste neuronale Netzwerkstudie sich aus dem bekannten Multilayer Perzeptron zusammensetzt mit einem Hidden Layer, welches trainiert wird mit dem sogenannten Back Propagation Algorithmus. Es wurden dazu zwei Experimente durchgeführt, in denen dieses Netzwerk entweder mit 100 msec oder mit 25 msec Zeit bis zur Erkennung eines Ziels verwendet wurde. Die zweite Studie über ein zweites neuronales Netz wurde dergestalt ausgebildet, daß zwei Multilayer Perzeptron Netzwerke, bei denen jedes mittels des Back Propagation Algorithmus trainiert worden ist, verwendet wurden ("Target Classification Using Radar Data: A Comparative Study"; von: Gerardo J. Melendez et al; SPIE Volume 1709 Applications on Artificial Neuronal Networks 3, 1992).

Weiterhin ist aus dem Stand der Technik bekannt eine Zielklassifikation zur Unterscheidung zwischen beispielsweise vier verschiedenen Klassen, wie z. B. Luftfahrzeugen, Bodenfahrzeugen, Hubschraubern und Gruppen von kleinen sich bewegenden Zielen vorzunehmen. Diese Unterscheidung wird ebenfalls mit Hilfe des Dopplerechos von ausgesendeten Radarsignalen vorgenommen. Hierbei wird ebenfalls die Möglichkeit der Verwendung des sogenannten Multilayer Perzeptron Netzwerkes mit dem Back Propagation Algorithmus erläutert ("A Neural Network Approach to Doppler-Based Target Classification"; von: Juan J. Martinez Madrid, et al; Universidad Politécnica de Madrid, Spanien, Seiten 450 bis 453).

Neben den bisher erläuterten Möglichkeiten, eine Klassifikation auf Land durchzuführen, gibt es des weiteren die Möglichkeit, eine Detektion von kleinen, sich bewegenden Radarsignalen in der Umgebung eines Ozeans vorzunehmen. Hierzu wird insbesondere unterschieden zwischen kleinen Eisbergen oder Teilen von Eisbergen, die mit konventionellen Radarsystemen der Marine nicht auffindbar sind. Die Detektion von kleinen Eisbergen oder Teilen von Eisbergen erfolgt hierbei ebenfalls mittels neuronaler Netze, die mit einem Back Propagation Algorithmus trainiert werden ("Neural Network Detection of Small Moving Radar Targets in an Ocean Environment"; von: Jane Cunningham et al; McMaster University, Hamilton, Ontario, 1992, Seite 306 bis 315).

Nachteilig bei der Verwendung des Netzwerktypen Multilayer Perzeptron Netzwerkes, welches mit dem Standardverfahren der Error Back Propagation trainiert wird, ist, daß sich in der praktischen Anwendung Nachteile ergeben, wie z. B. eine lange Entwicklungszeit für die empirische Suche nach einer problemangepaßten Netztopologie, sowie lange Rechenzeiten für das Training und eine vergleichsweise große und komplizierte Netzwerktopologie. Dies wirkt sich insbesondere dann nachteilig aus, wenn hochverwechselbare Klassen detektiert oder klassifiziert werden sollen, und wenn eine Vielzahl von ähnlichen Klassen eindeutig klassifiziert werden sollen.

Daher ist es Aufgabe der vorliegenden Erfindung, eine Vorrichtung und ein Verfahren zu schaffen, welche die Nachteile des Standes der Technik nicht aufweisen.

Dies wird erfindungsgemäß gelöst durch die Lehre des Anspruchs 1 und die Lehre der Ansprüche 5 und 8.

Vorteilhaft erweist sich bei der Verwendung der erfindungsgemäßen Vorrichtung und des erfindungsgemäßen Verfahrens, daß eine automatische Generierung einer problemangepaßten Netzwerktopologie und das Training der Netzwerkparameter in einem Schritt erfolgt.

Weiterhin vorteilhaft ist, daß nach Abschluß des Trainings eine schnelle Klassifikation erfolgen kann, da eine sehr kompakte Netzwerktopologie erzeugt worden ist. Diese beiden vorteilhaften Eigenschaften des erfindungsgemäßen neuronalen Netzes führen dazu, daß sowohl der Entwicklungsaufwand als auch der erforderliche Aufwand im späteren Einsatz, wie z. B. Rechenzeit und Speicherplatz stetig minimiert wird.

Weitere vorteilhafte Ausgestaltungen sind den Unteransprüchen 2 bis 4 und den Unteransprüchen 6 und 7 zu entnehmen.

Im folgenden wird die Erfindung anhand einer Figur und anhand von Ausführungsbeispielen näher erläutert. Folgende Figur zeigt:
- Figur: Blockschaltbild eines Simulationssystems zur Klassifikation von unterschiedlichen Objekten.

In dem Gegenstand der vorliegenden Erfindung geht es um eine Zielklassifikation auf Basis des Dopplertonechos. Ausgesendete Radarsignale werden von einem bewegten Objekt, welches zu klassifizieren ist, reflektiert. Die reflektierten Signale, die sogenannten Dopplertonechos, die einer Dopplerverschiebung unterliegen, werden wieder aufgefangen und werden einer automatischen Zielklassifikation zugeführt, um festzustellen, von welchem Objekt dieses Dopplertonecho reflektiert wurde. Unter den so reflektierten Signalen sind demgemäß akustische Aufnahmen von Dopplertönen zu verstehen. Beispielsweise läßt sich hier anführen daß eine Unterscheidung und Klassifikation zwischen Hubschrauber, Fußgänger und Panzer auf Grundlage der Dopplerechos wünschenswert ist. Bei einer Detektion von Seezielen ist es wünschenswert, zu detektieren und damit festzustellen, ob es sich um ein Objekt handelt oder nicht, wie beispielsweise eine Welle. Demgemäß steht hierbei das Ziel voran, eine Detektion von Objekten in einem Beobachtungssegment auf Basis des Dopplerechos von bewegten Objekten mittels neuronaler Netze herauszufinden.

Im folgenden wird zuerst auf die Klassifikation von bewegten Objekten auf dem Lande eingegangen. Zur Klassifikation muß eine Entscheidung aus einer Vielzahl von vorgegebenen Objekten in unterschiedlichen Klassen erfolgen. Eine Klassifikation ist dann erfolgt, wenn genau eine Entscheidung explizit getroffen worden ist. Optimierungskriterium ist hierbei die Minimierung der Verwechslungswahrscheinlichkeit. Hierbei bedeutet Verwechslungswahrscheinlichkeit die Wahrscheinlichkeit, ein bewegtes Objekt, wie z. B. einen Soldaten, mit einem Panzer in der Klassifikation zu vertauschen.

Eine solche Vorrichtung zur automatischen Klassifikation von Objekten mittels Dopplerechos von Radarsignalen wird eine solche Klassifikation mittels eines neuronalen Netzes ausgeführt. Erfindungsgemäß ist das neuronale Netz ein sogenanntes Kaskadenkorrelations-Netz. Das Kaskadenkorrelations-Netz, im folgenden in seiner englischsprachigen Bezeichnung "Cascade-Correlation" Netz verwendet, ist eine neue Architektur mit einem übergeordneten Lernalgorithmus für künstliche neuronale Netze. Als Besonderheit weist das Cascade-Correlations Netz keine vorher festgelegte Topologie auf. Cascade-Correlation beginnt mit einem minimalen Netzwerk, danach werden automatisch neue sogenannte Hidden Units einer nach dem anderen trainiert und hinzugefügt. Diese kreieren dann eine Multilayer Struktur. Ist einmal ein neuer Hidden Unit hinzuaddiert worden, wird dieser nicht mehr verändert und sozusagen eingefroren. Diese Einheit wird dann eine sogenannte permanente Detektorstruktur in dem Netzwerk. Wie ein solches Netz aufgebaut wird, bzw. wie Hidden Units hinzugefügt werden, soll erfindungsgemäß derart erfolgen, wie dies in dem Artikel "The Cascade-Correlation Learning Architecture"; von: Scott I. Fahlman und Christian Lebiere, August 29, 1991, School of Computer Science Carnegi Melon University Pittsburgh, PA 15213 beschrieben worden ist.

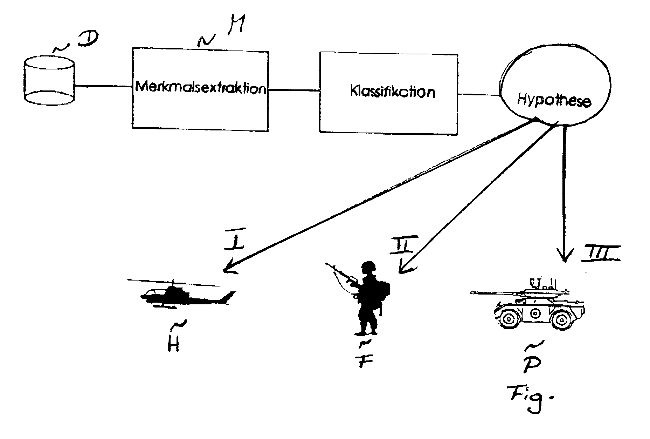

Besonders vorteilhaft erweist sich der Einsatz eines solchen Cascade-Correlations Netzes, wenn es sich um eine rückgekoppelte Netzwerkstruktur handelt oder wenn zusätzlich ein rückgekoppeltes neuronales Netz verwendet wird. Im folgenden wird anhand von Figur 1 und eines Ausführungsbeispiels erläutert, wie die Verwendung des neuronalen Netzes in Form eines Cascade-Correlations Netzes erfolgen kann. Dabei ist zu beachten, daß in der Trainingsphase dieses zu einer problemangepaßten Netzwerkstruktur des Cascade-Correlations Netzes führen soll, um danach in der Testphase eine solche kompakte Netztopologie zu erzeugen, die zu einer schnellen Klassifikation führt. In einer Datenbasis D sind akustische Aufnahmen von reflektierten Dopplertönen von Radarsignalen gespeichert. Die derart in der Datenbasis D vorhandenen Analogsignale wurden mit einer festgelegten Abtastfrequenz von z. B. 4 kHz digitalisiert. Des weiteren wurden Aufnahmen von jeweils 3 Sekunden oder von jeweils 1,5 Sekunden Dauer erstellt. Diese wurden in Blöcke von 128 Abtastwerten zusammengefaßt, wobei sich immer 64 Abtastwerte mit dem vorherigen Block überlappten. Als Analysefenster wurde ein Hammingfenster verwendet. Die entstandenen Signalwerte wurde mit Hilfe einer diskreten Fouriertransformation (genannt FFT) in den Frequenzbereich abgebildet. Die Darstellung erfolgte durch 64 Betragskoeffizienten, die gemittelt und logarithmiert wurden. In dein hier verwendeten Ausführungsbeispiel entstanden somit 63 Datensätze von drei verschiedenen Klassen I, II, III, dies waren Hubschrauber H, Fußgänger F und Panzer P. Daraus erfolgte eine willkürliche erste Unterteilung.

Für den Fall, daß die Testdaten in Zeitsegmente von 1,5 Sekunden unterteilt wurden, entstanden entsprechend doppelt so viele Datensätze. In der Testphase bzw. in der Trainingsphase wurde dem Cascade-Correlations Netz ein Originaldatensatz antrainiert. Hierbei wurde dem Cascade-Correlation Netz das Trainingsmuster bis zu einhundertmal präsentiert, bevor ein weiterer Netzknoten (Hidden Layer) angefügt wurde. Dies wurde so lange wiederholt, bis das Netz alle Muster richtig gelernt hatte. In einer weiteren Testreihe wurden die Testsegmente, die in 1,5 Sekunden Länge aufgeteilt worden sind, als Testsegment an das neuronale Netz herangeführt.

In der Anwendung einer vorher trainierten Vorrichtung zur Klassifikation werden die aufgezeichneten oder ankommenden Signale, die einem Datensatz D entsprechen, einer Merkmalsextraktion M zugeführt. Die Merkmalsextraktion M wird auf Basis cepstraler Koeffizienten durchgeführt, deren Anzahl variiert werden kann.

Darauf wird die Klassifikation K durchgeführt, worauf eine Hypothese H erstellt wird. Aufgrund der Hypothese H wird die Klasse und das Objekt festgelegt, welches erkannt und klassifiziert worden ist.

Im folgenden wird ein erfindungsgemäßes Verfahren zur automatischen Klassifikation und Detektion von Objekten mittels Dopplerechos von Radarsignalen näher erläutert (ohne Figur). Ein erfindungsgemäßes Verfahren führt in einem ersten Schritt eine Berechnung von Unterschieden zeitlich aufeinanderfolgender Dopplerechos von Radarsignalen durch. Die zeitlich aufeinanderfolgenden Dopplerechos werden entweder durch sich bewegende Objekte, die von einer feststehenden, Radarsignalen aussendenden Antenne detektiert wurden, erzeugt oder durch eine sich bewegende Antenne. Hierbei wird im ersten Fall die Bewegungsdynamik eines Objektes zur Klassifizierung herangezogen oder, wie im zweiten Fall, der Unterschied zwischen Hintergrund und Objekt detektiert. Beide Möglichkeiten sind gleichbedeutend wichtig und können unabhängig voneinander angewendet werden. Zusätzlich wird aus vergangenen und aktuell gespeicherten Klassifikationsergebnissen auf zukünftige Klassifikationsergebnisse geschlossen. Mit den berechneten Unterschieden von vergangenen und aktuell gespeicherten Klassifikationsergebnissen erfolgt eine automatische Netzwerkgenerierung mit einer möglichst problemorientierten Struktur (Cascade-Correlations Netzwerk). Ist die problemorientierte Netzwerkstruktur erst einmal antrainiert, ist das Cascade-Correlations Netzwerk in der Lage, schnell zu guten Klassifikationsergebnissen zu gelangen.

Weitere Ausgestaltungen eines solchen Verfahrens und der entsprechenden Vorrichtung sind, daß neben drei zu klassifizierenden Objekten auch eine sogenannte Garbage-Klassifikation möglich ist. Dies bedeutet, daß für den Fall, daß keine eindeutige Klassifikation durchgeführt werden kann oder daß ein Ergebnis nicht eindeutig ist, diese sogenannte Garbage-Klasse ausgewählt wird. Dies führt dazu, daß die Anzahl der richtig klassifizierten Objekte sich weiter erhöht und daß andere noch nicht trainierte Objekte eine AiZ "Vortraining" vollziehen, welches zu irgendeinem Zeitpunkt dann dazu führen kann, daß eine neue Klasse hinzugefügt wird und von da an selbständig klassifiziert werden kann. Die so in die Garbage-Klasse abgelegten Daten können erneut auf das Netzwerk gegeben werden und dadurch, nach einer weiteren Klassifikation, zu einer eindeutigen Klassifikation führen.

Eine weitere Behandlung von Fehlerquellen ist, über eine Vielzahl von Eingangssignalen einen Mittelwert zu bilden.

Im folgenden wird eine Detektion von bewegten Objekten in See erläutert. Bei einer Detektion von Objekten in einem Beobachtungssegment auf Basis der Dopplerechos von bewegten Objekten mit neuronalen Netzen, wird als Optimierungskriterium die Minimierung der Fehlalarmwahrscheinlichkeit und entsprechend die Maximierung der Entdeckungswahrscheinlichkeit angenommen. Auch bei diesem Verfahren wird durch Speicherung der Ergebnisse aus vergangenen Segmenten und deren Verwendung für zukünftige Entscheidungen auf neue Ergebnisse geschlossen. Bei der Detektion von Seezielen treten einige unerwünschte Reflektionen, z. B. von Wellen oder Regen, auf. Diese unerwünschten Reflektionen, im folgenden Clutter genannt, führen zu verfälschenden Ergebnissen. Daher erfolgt eine Mittelwertbildung über diese Clutter in einzelnen Zellen im gesamten Beobachtungsbereich und eine anschließende Differenzbildung zwischen gemitteltem Cluttermuster und allen Einzelzellen im Spektral- oder Cepstralbereich. Um eine verstärkte Differenzbildung der Leistungsdichtespektren bzw. der zugehörigen Cepstren zu erlauben, wird zwischen einzelnen Entfernungszellen zur Verstärkung der Unterschiede von Zellen mit und ohne Zielobjekt gefolgert. Innerhalb dieses Leistungsdichtespektrums erfolgt eine Maximumsuche. Dies dient dazu, Wellen oder Ziele oder Gischt, die Maxima verursachen, zu entdecken. Vorzugsweise wird hierbei die Ableitung der Einhüllenden des Leistungsdichtesprektrums verwendet, um besonders steile und schmale Maxima zu isolieren. Diese weisen meist auf Ziele hin.

## Patentansprüche

1. Vorrichtung zur automatischen Detektion oder Klassifikation von Objekten mittels Dopplerechos von Radarsignalen mit einem neuronalen Netz
**dadurch gekennzeichnet**, daß
das neuronale Netz ein Kaskadenkorrelations-Netz ist.

2. Vorrichtung nach Anspruch 1, bei der auf Land bewegte Objekte aus vorgegebenen Klassen mit einer Vielzahl von Objekten heraus klassifiziert werden.

3. Vorrichtung nach Anspruch 1, bei der Objekte in Wasser detektiert werden, indem in Abhängigkeit ob ein Ziel vorhanden ist oder nicht eine positive oder negative Entscheidung getroffen wird.

4. Vorrichtung nach einem der Ansprüche 1 bis 3, bei der das neuronale Netz ein rückgekoppeltes neuronales Netz ist oder bei der zusätzlich ein rückgekoppeltes neuronales Netz vorhanden ist.

5. Verfahren zur automatischen Klassifikation oder Detektion von Objekten mittels Dopplerechos von Radarsignalen
**dadurch gekennzeichnet**, daß
- eine Berechnung von Unterschieden zeitlich aufeinander folgender Dopplerechos von Radarsignalen vorgenommen wird und aus vergangenen und aktuellen gespeicherten Klassifikationsergebnissen, auf zukünftige Klassifikationsergebnisse geschlossen werden kann und
- ein solches neuronales Netz zur Klassifizierung und Detektion eingesetzt wird, welches eine automatische Netzwerkgenerierung ermöglicht mit einer problemorientierten Struktur.

6. Verfahren nach Anspruch 4, bei dem zur Behandlung von Fehlerquellen, die zu einer fehlerhaften Klassifikation oder Detektion führen, über eine Vielzahl von Eingangssignalen ein Mittelwert gebildet wird.

7. Verfahren nach einem der Ansprüche 4 oder 5, bei dem es ein Klassifikationsergebnis ist, daß keine Klassifikation eindeutig ermittelt werden konnte.

8. Verwendung der Vorrichtung nach Anspruch 1 zur Klassifikation von auf Land bewegten Objekten in Klassen mit Hubschraubern, Panzern und Soldaten.
